# EUROPÄISCHE PATENTSCHRIFT

(11) **EP 1 406 364 B1**
(45) Veröffentlichungstag und Bekanntmachung des Hinweises auf die Patenterteilung: **01.07.2009**
(21) Anmeldenummer: 03090292.8
(22) Anmeldetag: 11.09.2003
(51) Int. Cl.: H02G 15/22, H02G 15/06

(54) **Hochspannungs-Durchführungsanordnung mit mehreren Durchführungen**
High-voltage leadthrough arrangement with several leadthroughs
Dispositif de traversée haute tension avec plusieurs traversées

(30) Priorität: 02.10.2002 DE 10246993
(43) Veröffentlichungstag der Anmeldung: 07.04.2004
(73) Patentinhaber: SIEMENS AKTIENGESELLSCHAFT, 80333 München (DE)
(72) Erfinder: Schöps, Jürgen, 13509 Berlin (DE)

(56) Entgegenhaltungen:
- DE-A- 19 720 089
- GB-A- 927 457
- US-A- 1 928 636

## Beschreibung

Die Erfindung bezieht sich auf eine Hochspannungs-Durchführungsanordnung mit mehreren, insbesondere drei Durchführungen, die Hauptachsen aufweisen, auf denen im Innern eines Gehäuses angeordnete erste Enden der Durchführungen liegen und auf denen zweite Enden der Durchführungen angeordnet sind, die sich außerhalb des Gehäuses befinden, wobei die Wegstrecke zwischen den ersten Enden einer ersten und einer zweiten Durchführung kleiner ist als die Wegstrecke zwischen den zweiten Enden der ersten und der zweiten Durchführung und die ersten Enden und die zweiten Enden jeweils auf einer Kreisbahn angeordnet sind.

Eine Hochsparinungs-Durchführungsanordnung ist beispielsweise aus der Offenlegungsschrift DE 197 20 092 A1 bekannt. Die dort beschriebene Anordnung weist drei Durchführungen auf, welche als Kabelendverschlüsse ausgebildet sind und die elektrischen Leiter von Kabeln durch das Kapselungsgehäuse einer gasisolierten Hochspannungsanlage hindurchführen. Zur Beeinflussung des die durch das Kapselungsgehäuse hindurchgeführten Leiter umgebenden elektrischen Feldes sind die Durchführungen relativ großvolumig gestaltet. Die Durchführungen.weisen an ihren der gasisolierten Hochspannungsanlage zugewandten Enden eine konische Kontur auf.

Aus der Offenlegungsschrift DE 197 20 089 A1 ist ein dreipoliger Kabelendverschluss bekannt. Der dortige Kabelendverschluss weist ein Gehäuse auf, welches kegelstumpfförmig ausgebildet ist. An dem Gehäuse angeordnete Befestigungsflächen sind mit Durchgangsöffnungen versehen, so dass Isolierkörper von Kabelendverschlüssen hindurchgesteckt werden können und mittels weiterer Schraubverbindungen befestigt werden können.

Aufgrund der großvolumigen Bauform der einzelnen Durchführungen wird ein verhältnismäßig großer Flansch benötigt, um die Durchführungen an die gasisolierte Hochspannungsanlage anzuflanschen.

Der vorliegenden Erfindung liegt die Aufgabe zugrunde, eine Hochspannungs-Durchführungsanordnung der eingangs genannten Art so auszubilden, dass ihr Bauvolumen vermindert wird.

Die Aufgabe wird bei einer Hochspannungs-Durchführungsanordnung der eingangs genannten Art erfindungsgemäß dadurch gelöst, dass die verlängerten Hauptachsen zumindest zweier Durchführungen sich annähernd in einem Punkt schneiden.

Bei der Verwendung von standardisierten Durchführungen, die eine keulenartige zu ihren Enden jeweils konisch zulaufende äußere Gestalt aufweisen, ist bei einer erfindungsgemäßen Anordnung mehrerer dieser Durchführungen die äußere Kontur der gesamten Hochspannungs-Durchführungsanordnung in einer kompakten Art und Weise ausgestaltet. Weiterhin ist das im Innern des Gehäuses vorhandene Volumen vermindert, welches nicht durch Einbauten ausgefüllt ist. Damit verringert sich der Bedarf an Isoliermedien, beispielsweise unter erhöhtem Druck stehendes Isoliergas, zum Befüllen dieser Volumina. Bei dem Einsatz von einer geringen Menge Isoliergas und bei einer kompakten Außenkontur ist eine gleichbleibende bzw. sogar erhöhte Spannungsfestigkeit der Anordnung erzielbar. Weiterhin ist der bei einem Anschluss der Durchführungen an die elektrischen Leiter einer gasisolierten Hochspannungsanlage notwendige Flansch in seiner Größe vermindert. Dadurch ist es ermöglicht, Standardgehäusebauteile zum Anflanschen einer erfindungsgemäßen Hochspannungs-Durchführungsanordnung zu verwenden. Sondergehäuse mit besonderen Flanschen sind somit nicht mehr erforderlich. Trotz der nahe beieinander liegenden ersten Enden der Durchführungen, sind die zweiten Enden der Durchführungen derart weit voneinander beabstandet, dass beispielsweise der Anschluss von Kabeln an den zweiten Enden der Durchführungen in einer vereinfachten Weise möglich ist. Zur Montage steht ein ausreichend großer Bereich an jedem der zweiten Enden der Durchführungen zur Verfügung. Weiterhin ist die Heranführung von Kabeln zu den zweiten Enden der Durchführungen in einer einfachen Art möglich.

Eine vorteilhafte Ausgestaltung kann vorsehen, dass die verlängerten Hauptachsen zumindest zweier Durchführungen sich annähernd in einem Punkt schneiden. Weiterhin kann vorteilhaft vorgesehen sein, dass die verlängerten Hauptachsen aller Durchführungen sich annähernd in einem Punkt schneiden.

Durch eine derartige Anordnung der Hauptachsen ergeben sich kompakte Anordnungen, die eine geeignete symmetrische Gestalt aufweisen. Diese symmetrische Gestalt beeinflusst die dielektrische Feldverteilung an und in der Hochspannungs-Durchführungsanordnung günstig. Weiterhin sind derartig symmetrisch gestaltete Baugruppen besonders dazu geeignet, in ein modulares Anlagensystem eingebunden zu werden.

Eine weitere vorteilhafte Ausgestaltung kann vorsehen, dass die ersten Enden und die zweiten Enden jeweils auf einer Kreisbahn angeordnet sind.

Die jeweilige Anordnung der ersten und zweiten Enden auf Kreisbahnen bewirkt eine besonders symmetrische Hochspannungs-Durchführungsanordnung. Näherungsweise ergibt sich bei einer derartigen Ausgestaltung eine Hochspannungs-Durchführungsanordnung, die eine im Wesentlichen kegelstumpfförmige Außenkontur aufweist. Das die Durchführungen umgebende Gehäuse kann somit in einer einfachen Weise eine abgerundete äußere Kontur erhalten.

Eine weitere vorteilhafte Ausgestaltung kann vorsehen, dass die ersten Enden und die zweiten Enden jeweils auf einer Geraden angeordnet sind.

Eine derartige Ausgestaltung einer Hochspannungs-Durchführungsanordnung gestattet es, diese mit einer besonders geringen Bautiefe zu konstruieren. Die einzelnen Durchführungen liegen dabei fächerartig in einer Ebene nebeneinander. Dadurch entsteht eine relativ breite, eine geringe Tiefe aufweisende Hochspannungs-Durchführungsanordnung, welche annähernd die äußere Kontur eines Zylindersegmentes aufweist.

Alternativ kann weiterhin vorgesehen sein, dass die ersten oder die zweiten Enden auf einer Kreisbahn und die zweiten oder die ersten Enden auf einer Geraden angeordnet sind.

Die Anordnung der ersten und der zweiten Enden auf Kreisbahnen oder auf Geraden ermöglicht eine sehr flexible Ausgestaltung der Hochspannungs-Durchführungsanordnung. Diese Ausgestaltungen sind besonders dafür geeignet, bestehende Hochspannungs-Durchführungsanordnungen zu ersetzen und dabei die vorhandenen geometrischen Abmessungen der Anlagen bzw. der Bauwerke zu berücksichtigen.

Vorteilhafterweise kann weiterhin vorgesehen sein, dass die Durchführungen durch Öffnungen einer gemeinsamen Tragplatte hindurchgreifen.

Die Verwendung einer gemeinsamen Tragplatte gestattet es, die geometrische Anordnung der einzelnen Durchführungen zueinander festzulegen. Defekte Durchführungen können einzeln durch fehlerfreie Durchführungen ersetzt werden.

Weiterhin kann vorteilhaft vorgesehen sein, dass die gemeinsame Tragplatte auf einer ihrer Deckflächen mehrere geneigt zueinander angeordnete Flanschflächen für Durchführungen aufweist.

Die geneigt zueinander angeordneten Flanschflächen legen die Neigung der Hauptachsen der einzelnen Durchführungen zueinander fest. Durch eine Variation der Winkellagen der einzelnen Flanschflächen zueinander sind so unter Beibehaltung des Konstruktionsprinzips Hochspannungs-Durchführungsanordnungen mit verschiedenen Gestalten erzeugbar. Weiterhin ist eine Montage einer Durchführung auf einer geneigten Flanschfläche in der bisher verwendeten Montagetechnik möglich. Eine fehlerhafte Einstellung der Winkellage der einzelnen Durchführungen ist während der Montage nahezu ausgeschlossen. Somit lassen sich die Hochspannungs-Durchführungsanordnungen bei einem gleichbleibenden Montageaufwand in einer verbesserten Qualität produzieren.

Im Folgenden wird die Erfindung anhand eines Ausführungsbeispiels in einer Zeichnung schematisch gezeigt und nachfolgend näher beschrieben.

Dabei zeigt die
- Figur 1: eine erste Variante einer Hochspannungs-Durchführungsanordnung in einem eingebauten Zustand, die
- Figur 2: eine erste Ansicht einer ersten Tragplatte mit mehreren montierten Durchführungen, die
- Figur 3: eine zweite Ansicht der ersten Tragplatte mit den montierten Durchführungen, die
- Figur 4: eine erste Ansicht einer zweiten Variante einer Tragplatte mit mehreren montierten Durchführungen, und die
- Figur 5: eine zweite Ansicht der zweiten Variante der Tragplatte mit den montierten Durchführungen.

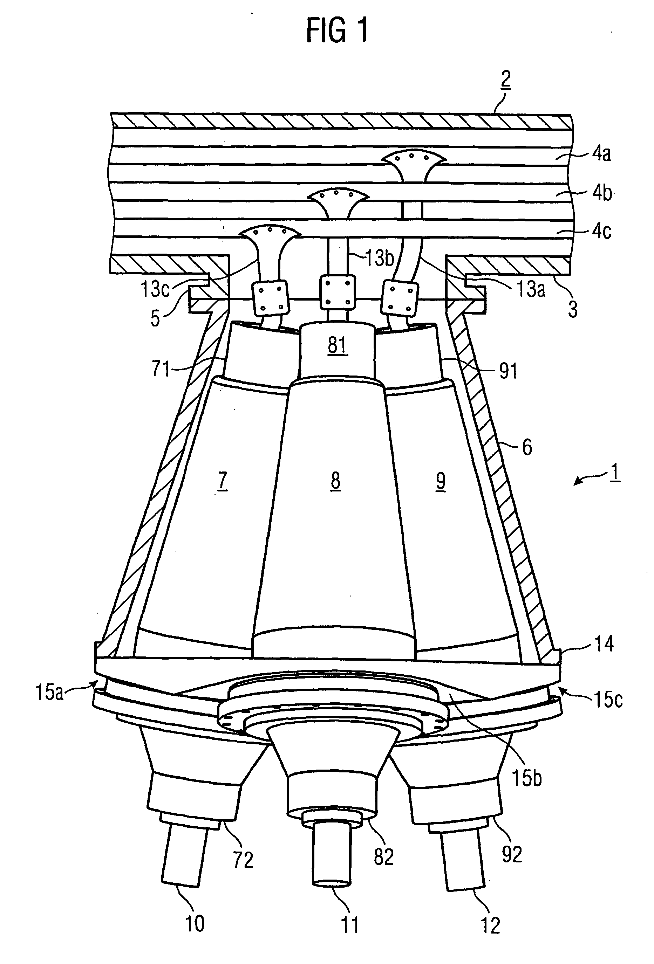

Die in der Figur 1 dargestellte erste Variante einer Hochspannungs-Durchführungsanordnung 1 zeigt diese in einem angeflanschten Zustand an eine druckgasisolierte Hochspannungsanlage 2 in einem Schnitt. Die druckgasisolierte Hochspannungsanlage 2 weist ein rohrförmiges Kapselungsgehäuse 3 auf. Im Innern des rohrförmigen Kapselungsgehäuses 3 sind drei Sammelschienenabschnitte 4a, 4b, 4c angeordnet. Das Innere des rohrförmigen Kapselungsgehäuses 3 ist mit einem unter erhöhtem Druck stehenden Isoliergas, beispielsweise Schwefelhexafluorid oder Stickstoff befüllt. Auf der Mantelfläche des rohrförmigen Kapselungsgehäuses 3 ist ein Anschlussflansch 5 angeordnet. An den Anschlussflansch 5 ist ein Gehäuse 6 der ersten Variante einer Hochspannungs-Durchführungsanordnung 1 angeflanscht. Im Innern des Gehäuses 6 sind eine erste, eine zweite und eine dritte Durchführung 7, 8, 9 angeordnet. Die Durchführungen 7, 8, 9 weisen jeweils erste Enden 71, 81, 91 auf. Die ersten Enden 71, 81, 91 sind innerhalb des Gehäuses 6 angeordnet. Alternativ ist es weiterhin möglich, dass die ersten Enden 71, 81, 91 auch in das Innere des rohrförmigen Kapselungsgehäuses 3 hineinragen oder im Bereich des Flansches 5 eine Isoliergasschottung angeordnet ist. Weiterhin weisen die Durchführungen 7, 8, 9 zweite Enden 72, 82, 92 auf. Die zweiten Enden 72, 82, 92 der Durchführungen 7, 8, 9 befinden sich an dem von der druckgasisolierten Hochspannungsanlage 2 abgewandten Enden der Durchführungen 7, 8, 9. Die zweiten Enden 72, 82, 92 sind außerhalb des druckgasisolierten Raumes des Gehäuses 6 angeordnet. Die Durchführungen 7, 8, 9 sind Kabelendverschlüsse. In ihren zentralen Abschnitten weisen die Durchführungen 7, 8, 9 eine zu den ersten Enden 71, 81, 91 konisch zulaufende Gestalt auf. Diese keulenartige Verdickung ist im wesentlichen aus in Isoliermaterial eingebetteten Feldsteuerelektroden gebildet.

An den zweiten Enden 72, 82, 92 der Durchführungen 7, 8, 9 ist jeweils ein erstes einpoliges Kabel 10, ein zweites einpoliges Kabel 11 sowie ein drittes einpoliges Kabel 12 angeschlossen. Statt der einpoligen Kabel 10, 11, 12 können beispielsweise auch gasisolierte Rohrleiter oder auch freiluftisolierte elektrische Leiter an den zweiten Enden 72, 82, 92 der Durchführungen 7, 8, 9 angeschlossen werden. An den ersten Enden 71, 81, 91 der Durchführungen 7, 8, 9 sind Anschlussstücke 13a, 13b, 13c angeschlossen, welche die im Innern der Durchführungen 7, 8, 9 befindlichen elektrischen Leiter mit den einzelnen Sammelschienenabschnitte 4a, 4b, 4c elektrisch verbinden.

Das erste Ende 71 sowie das zweite Ende 72 der ersten Durchführung 7 liegen auf der Hauptachse der ersten Durchführung 7. Das erste Ende 81 sowie das zweite Ende 82 der zweiten Durchführung 8 liegen auf der Hauptachse der zweiten Durchführung 8. Das erste Ende 91 sowie das zweite Ende 92 der dritten Durchführung 9 liegen auf der Hauptachse der dritten Durchführung 9. Die Hauptachsen der Durchführungen 7, 8, 9 sind zueinander geneigt angeordnet, und zwar derart, dass die ersten Enden 71, 81, 91 der Durchführungen 7, 8, 9 auf einer Kreisbahn liegen. Ebenso liegen die zweiten Enden 72, 82, 92 der Durchführungen 7, 8, 9 auf einer Kreisbahn. Dabei weist die den zweiten Enden 72, 82, 92 zugeordnete Kreisbahn einen größeren Durchmesser auf, als die den ersten Enden 71, 81, 91 zugeordnete Kreisbahn. Die Neigung der Hauptachsen der Durchführungen 7, 8, 9 wird durch eine erste Tragplatte 14 bestimmt. Die erste Tragplatte 14 weist Öffnungen auf, durch welche jeweils eine der Durchführungen 7, 8, 9 hindurchgreift. Die Durchführungen 7, 8, 9 sind gasdicht mit der ersten Tragplatte 14 verbunden. zur Erzielung der Neigung der Hauptachsen zueinander weist die erste Tragplatte 14 an ihrer von dem Gehäuse 6 abgewandten Deckfläche mehrere Flanschflächen 15a, 15b, 15c auf, welche zueinander geneigt sind. Durch die Anordnung der Durchführungen 7, 8, 9 zueinander ist eine kompakte Ausgestaltung des Gehäuses 6 ermöglicht, das eine im Wesentlichen kegelstumpf- bzw. tetraederstumpfartige Mantelfläche aufweist. Die im Innern des Gehäuses 6 auftretende Hohlräume, die durch das Isoliergas zu befüllen sind, weisen bei einer derartigen Ausgestaltung ein geringes Volumen auf. Weiterhin ist durch die Aufspreizung der zweiten Enden 72, 82, 92 der Durchführungen 7, 8, 9 ein vergrößerter Montageraum für die Arbeiten zum Anschluss der Kabel 10, 11, 12 an die Durchführungen 7, 8, 9 geschaffen.

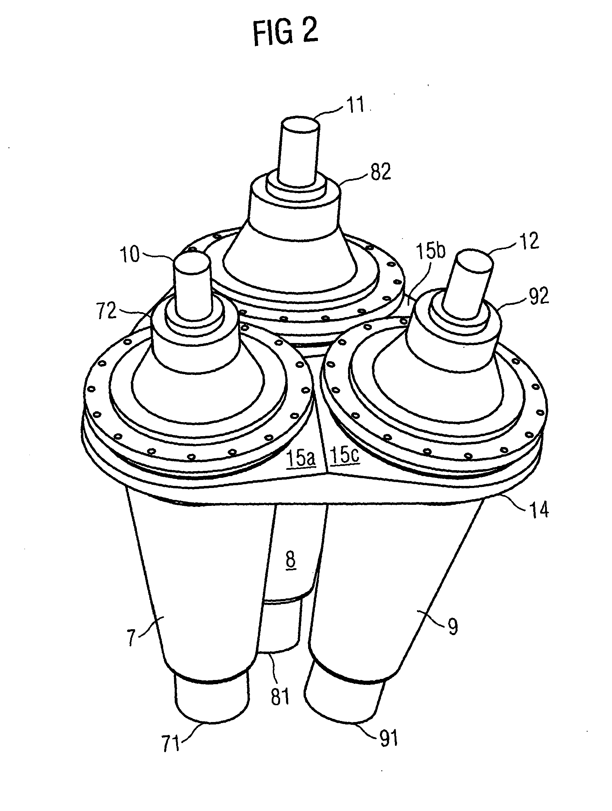

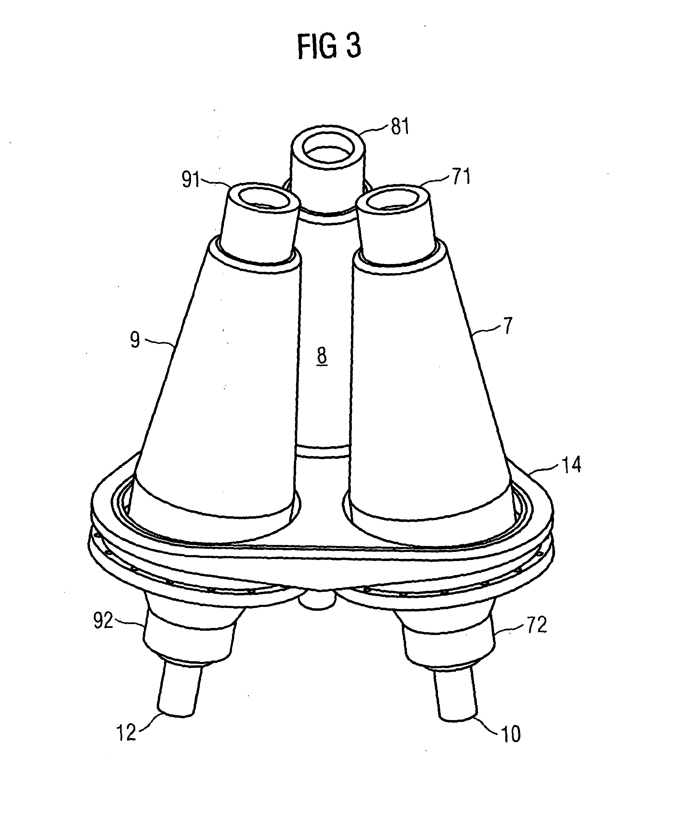

Die in den Figuren 2 und 3 dargestellten Ansichten der ersten Tragplatte 14 sowie der mit der ersten Tragplatte 14 verbundenen Durchführungen 7, 8, 9 zeigen die Ausrichtung der Hauptachsen der Durchführungen, 7, 8, 9 sowie die Anordnungen der ersten Enden 71, 81, 91 sowie der zweiten Enden 72, 82, 92 auf den Kreisbahnen. Die Hauptachsen der Durchführungen 7, 8, 9 liegen dabei so zueinander, dass sich alle Hauptachsen annähernd in einem Punkt schneiden.

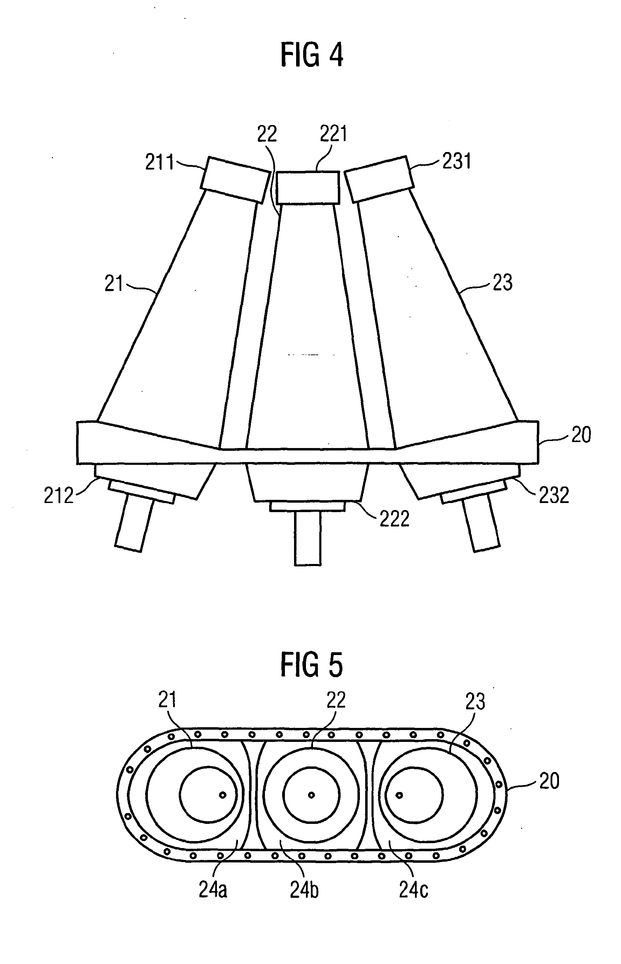

Die Figuren 4 und 5 zeigen zwei Ansichten einer zweiten Tragplatte 20, auf welcher eine vierte Durchführung 21, eine fünfte Durchführung 22 sowie eine sechste Durchführung 23 montiert sind. Bis auf die Ausrichtung der Hauptachsen der der zweiten Tragplatte 20 zugeordneten Durchführungen 21, 22, 23 entspricht der konstruktive Aufbau prinzipiell der vorstehend beschriebenen ersten Variante. Die ersten Enden 211, 221, 231 der der zweiten Tragplatte 20 zugeordneten Durchführungen 21, 22, 23 sind ebenso, wie deren zweite Enden 212, 222, 232 in ihrer Projektion auf einer Geraden angeordnet. Die Hauptachsen der vierten Durchführung 21 sowie der sechsten Durchführung 23 sind auf die Hauptachse der fünften Durchführung 22 geneigt. Diese Neigung wird durch auf der zweiten Tragplatte 20 angeordnete Flanschflächen 24a, 24b, 24c bewirkt. Die Flanschflächen 24a, 24b, 24c der zweiten Tragplatte 20 sind auf der den ersten Enden 211, 221, 231 der Durchführungen 21, 22, 23 zugewandten Deckfläche der zweiten Tragplatte 20 angeordnet.

Neben der ersten Variante einer Hochspannungs-Durchführungsanordnung 1 und der in den Figuren 4 und 5 dargestellten zweiten Variante einer Tragplatte 20 sind auch Kombinationen aus diesen beiden Varianten hinsichtlich der Lage der Hauptachsen der Durchführungen konstruierbar. So kann beispielsweise vorgesehen sein, dass nur eine der Durchführungen einer weiteren Durchführung zugeneigt ist oder erste Enden auf einer Kreisbahn und zweite Enden auf einer Geraden oder umgekehrt angeordnet sind. Weiterhin kann auch vorgesehen sein, dass die Tragplatte mehrteilig ausgestaltet ist.

## Patentansprüche

1. Hochspannungs-Durchführungsanordnung (1) mit mehreren, insbesondere drei Durchführungen (7, 8, 9), die Hauptachsen aufweisen, auf denen im Innern eines Gehäuses (6) angeordnete erste Enden (71, 81, 91) der Durchführungen (7, 8, 9) liegen und auf denen zweite Enden (72, 82, 92) der Durchführungen (7, 8, 9) angeordnet sind, die sich außerhalb des Gehäuses (6) befinden, wobei
die Wegstrecke zwischen den ersten Enden (71, 81) einer ersten und einer zweiten Durchführung (7, 8) kleiner ist als die Wegstrecke zwischen den zweiten Enden (72, 82) der ersten und der zweiten Durchführung (7, 8) und die ersten Enden (71, 81, 91) und die zweiten Enden (72, 82, 92) jeweils auf einer Kreisbahn angeordnet sind, **dadurch gekennzeichnet, dass** die verlängerten Hauptachsen zumindest zweier Durchführungen (7, 8) sich annähernd in einem Punkt schneiden.

2. Hochspannungs-Durchführungsanordnung (1) nach Anspruch 1,
**dadurch gekennzeichnet, dass** die verlängerten Hauptachsen aller Durchführungen (7, 8, 9) sich annähernd in einem Punkt schneiden.

3. Hochspannungs-Durchführungsanordnung (1) nach Anspruch 1 oder 2,
**dadurch gekennzeichnet, dass** die Durchführungen (7, 8, 9, 21, 22, 23) durch Öffnungen einer gemeinsamen Tragplatte (14, 20) hindurchgreifen.

4. Hochspannungs-Durchführungsanordnung (1) nach Anspruch 3,
**dadurch gekennzeichnet, dass**
die gemeinsame Tragplatte (14, 20) auf einer ihrer Deckflächen mehrere geneigt zueinander angeordnete Flanschflächen (15a, 15b, 15c; 24a, 24b, 24c) für Durchführungen (7, 8, 9; 21, 22, 23) aufweist.

## Claims

1. High-voltage bushing arrangement (1) having a plurality of bushings (7, 8, 9) in particular in three bushings (7, 8, 9) which have major axes on which first ends (71, 81, 91), which are arranged in the interior of a housing (6), of the bushings (7, 8, 9) lie, and on which second ends (72, 82, 92) of the bushings (7, 8, 9) are arranged, which are located outside the housing (6), wherein
the distance between the first ends (71, 81) of a first and a second bushing (7, 8) is less than the distance between the second ends (72, 82) of the first and the second bushing (7, 8) and the first ends (71, 81, 91) and the second ends (72, 82, 92) are each arranged on a circular path,
**characterized in that**
the lengthened major axes of at least two bushings (7, 8) intersect approximately at a point.

2. High-voltage bushing arrangement (1) according to Claim 1, **characterized in that** the lengthened major axes of all the bushings (7, 8, 9) intersect approximately at a point.

3. High-voltage bushing arrangement (1) according to Claim 1 or 2, **characterized in that** the bushings (7, 8, 9, 21, 22, 23) pass through openings in a common mounting plate (14, 20).

4. High-voltage bushing arrangement (1) according to Claim 3, **characterized in that** the common mounting plate (14, 20) has, on its top surfaces, a plurality of flange surfaces (15a, 15b, 15c; 24a, 24b, 24c), which are arranged inclined with respect to one another, for bushings (7, 8, 9; 21, 22, 23).

## Revendications

1. Dispositif (1) de traversée de haute tension ayant plusieurs, notamment trois traversées (7, 8, 9), qui ont des axes principaux sur lesquels se trouvent, à l'intérieur d'une enveloppe (6), des premières extrémités (71, 81, 91) des traversées (7, 8, 9) et sur lesquels sont disposées des deuxième extrémités (72, 82, 92) des traversées (7, 8, 9), qui se trouvent à l'extérieur de l'enveloppe (6), dans lequel la distance entre les premières extrémités (71, 81) d'une première et d'une deuxième traversée (7, 8) est plus petite que la distance entre les deuxièmes extrémités (72, 82) de la première et de la deuxième traversée (7, 8) et les premières extrémités (71, 81, 91) et les deuxièmes extrémités (72, 82, 92) sont disposées respectivement sur une trajectoire circulaire,
**caractérisé en ce que** les prolongements des axes principaux d'au moins deux traversées (7, 8) se coupent à peu près en un point.

2. Dispositif (1) de traversée de haute tension suivant la revendication 1, **caractérisé en ce que** les prolongements des axes principaux de toutes les traversées (7, 8, 9) se coupent à peu près en un point.

3. Dispositif (1) de traversée de haute tension suivant la revendication 1 ou 2, **caractérisé en ce que** les traversées (7, 8, 9, 21, 22, 23) passent dans des ouvertures d'une plaque (14, 20) commune de support.

4. Dispositif (1) de traversée de haute tension suivant la revendication 3, **caractérisé en ce que** la plaque (14, 20) commune de support a, sur l'une de ses surfaces supérieures, plusieurs surfaces (15a, 15b, 15c ; 24a, 24b, 24c) de flasque inclinées les unes par rapport aux autres pour des traversées (7, 8, 9 ; 21, 22, 23).
